# EUROPEAN PATENT SPECIFICATION

(11) **EP 4 097 263 B1**
(45) Date of publication and mention of the grant of the patent: **06.03.2024**
(21) Application number: 21701033.9
(22) Date of filing: 26.01.2021
(51) Int. Cl.: C21D 8/04, C23C 30/00, C23C 2/06, C23C 2/12, C23C 2/26, C21D 9/48, C23C 2/02, C22C 38/00, C22C 38/04, C22C 38/06, C22C 38/14

(54) **ULTRA LOW CARBON INTERSTITIAL FREE STEEL**
INTERSTITIALFREIER STAHL MIT EXTREM NIEDRIGEM KOHLENSTOFFGEHALT
ACIER SANS INTERSTITIEL À TRÈS FAIBLE TENEUR EN CARBONE

(30) Priority: 29.01.2020 EP 20154419; 02.09.2020 EP 20194185
(43) Date of publication of application: 07.12.2022
(73) Proprietor: Tata Steel IJmuiden B.V., 1951 JZ Velsen-Noord (NL)
(72) Inventor: VAN VELDHUIZEN, Hendrik Bart, 1970 CA Ijmuiden (NL); VAN DER HOEVEN, Job Anthonius, 1970 CA Ijmuiden (NL)
(74) Representative: Group Intellectual Property Services
(86) International application number: PCT/EP2021/051765
(87) International publication number: WO 2021/151896

(56) References cited:
- EP-A1- 0 572 666
- JP-A- H04 236 751
- JP-A- H05 279 797
- US-A1- 2015 267 284

## Description

The invention relates to an ultra low carbon interstitial free steel.

Interstitial free steel (IF steel) is a mild steel with an excellent formability because all interstitial elements, carbon, nitrogen, and boron, are bound, e.g. by titanium or niobium or aluminium, to form carbides, nitrides, and borides. Thus, the interstitial elements do not block the movement of the dislocations in the iron crystal grain. Due to the stabilisation of carbon, nitrogen and boron IF steels can be stored an almost unlimited time, contrary to bake hardenable steels.

Due to the high formability IF steel is mostly used in the automotive industry for producing body-in-white parts, which parts are often complicated to form by pressing. High formability thus is a requirement. Because of the low carbon content, IF steels are mild steels having a low yield strength and a high ductility.

IF steels are for example standardised in EN 10346:2015. In this standard the low carbon steels for cold forming are mentioned in Table 1 and Table 7. They are indicated as DX51 - DX57, wherein the higher numbers indicate a better formability. The highest formability is provided by DX57. According to the standard, these IF steels contain at most 0.30 mass% titanium.

The German standard VDA 239-100 (2016) also provides cold rolled mild steels in Table 6 and Table 24. These steels are indicated as CR1 - CR5 and have a composition and mechanical properties that are almost identical to the DX types of norm EN 10346:2015. A CR6 cold rolled mild steel with improved ductility is entered as draft standard in the VDA 239-100 revision May 2019.

It is known that it is advantageous to use ultra low carbon steels (ULC steels) as IF steels, because the lower the amount of carbon (and nitrogen) in the steel, the less titanium or niobium is needed to bind the carbon and nitrogen. Thus, in practice lower amounts of elements are used than the maximum amounts indicated in the norms.

On the other hand, the ULC steels need to have a reasonable yield strength and tensile strength, as prescribed in the norms. This means that sufficient strength providing elements need to be present, such as manganese, phosphorus and/or silicon. JPH05279797A discloses a cold rolled steel sheet for ultra deep drawing having excellent deep drawing formability and stretch formability and improved deep drawing brittleness resistance.

It is an object of the present invention to provide an ultra low carbon IF steel strip, sheet or blank having improved formability.

It is another object of the invention to provide an ultra low carbon IF steel strip, sheet or blank having an improved plastic strain rate.

It is a further object of the invention to provide an ultra low carbon IF steel strip, sheet or blank having an improved strain hardening exponent.

It is moreover an object of the invention to provide an ultra low carbon IF steel strip, sheet or blank meeting the requirements as mentioned in the draft VDA 239-100 (May 2019) norm.

The invention relates to an ultra low carbon interstitial free steel strip, sheet or blank as defined in the appended claims.

The average plastic strain ratio r or average r-value is defined as:
(r0+2*r45+r90)/4, wherein
r0 is the plastic strain ratio in rolling or longitudinal direction,
r45 is the plastic strain ratio in diagonal direction, and
r90 is the plastic strain ratio in transverse direction.

Since the measurements of the values of elongation A80, plastic strain ratio r and strain hardening exponent n (in all three directions) can be inaccurate and all values measured can slightly differ over the strip that are hot rolled from one cast, the values of A80 and r and n as used in the claims are the mean value of at least three measurements performed on at least three different strips of one cast. In this way inaccuracies will statistically be reduced.

The inventors have found that an ultra low carbon interstitial free steel strip, sheet or blank with this composition can be provided with the mechanical properties as described above, wherein especially the elongation A80 and the average plastic strain ratio r and the strain hardening exponent n90 in transverse direction give a good indication of the required ductility of the IF steel. The inventors also have found that it is especially needed that the sum of Ti, Nb and V has to be limited to 0.10 weight% to obtain the required mechanical properties and the required ductility.

Carbon is usually present to provide strength to the steel, but when too much carbon is present more carbides are to be formed, which hamper ductility. Hence carbon is present in a maximum amount of 0.0022 weight%. Since some carbon is unavoidable and necessary for the strength, the minimum amount is 0.0010 weight%.

Manganese is present in an IF steel to provide strength but at the same time the formability, or A80 and r-value decrease with increasing Mn. Therefore, the maximum amount is 0.13 weight%. A minimum amount is 0.04 weight%, also depending on the amount of other elements in the IF steel.

Silicon can also be used to improve the strength of the IF steel but at the same time the formability, or A80 and r-value decrease with increasing Si. For this reason, a maximum amount of silicon is 0.013 weight%.

A minimum amount of silicon is 0.002 weight% in view of strength requirements.

Aluminium is used for killing the steel, that is for binding with N, in the same way as Ti does. For this reason, an aluminium amount between 0.03-0.07 weight% is present in the steel.

Phosphorus can be used to improve the strength of the IF steel but at the same time it will reduce the formability and it is detrimental to steelmaking. It can also lead to an increase in the Ductile to Brittle Transformation Temperature (DBTT). Therefore, phosphorus should be present in very low amounts preferably max 0.013 weight%. Minimum amount is 0.002 weight% in view of the required strength.

Sulphur and nitrogen are detrimental to steelmaking and to the steel itself and therefore have to be present in very low amounts. The maximum amounts for S are 0.013 weight%, and for N the maximum amounts are at most 0.004 weight%. Especially nitrogen has to be present in low amounts because it has to be bound to form nitrides in IF steel. For S the minimum amount is 0.003 weight% and for N the minimum amount is 0.001 These minimum amounts result from steelmaking requirements.

Preferably, the sum of Mn + Si + 10*P is at most 0.25 weight%, preferably at most 0.20 weight% to reach the required strength. The minimum of this sum is preferably 0.06, more preferably 0.07 weight%.

Titanium, niobium and/or vanadium are added to bind the carbon and nitrogen. Nitrogen can also be bound by aluminium or boron. Together they should be sufficient to make sure there is no carbon nor nitrogen left in solid solution. However, not too much of these elements should be present, also in view of the cost of these elements, and therefore Ti+Nb+V together are maximised at 0.10 weight%. More preferably, the sum is maximised at 0.09 weight%.

In a further preferred embodiment, no vanadium and preferably also no niobium is added to the IF steel, meaning that these elements are only present as unavoidable impurity. Titanium is preferably present in an amount of at least 0.01 weight%, more preferably in an amount of at least 0.03 weight% and most preferably in an amount of at least 0.05 weight%, especially when no vanadium and no niobium are added to the IF steel.

Optional elements can be present in the amounts indicated above. Preferably the upper limits for these elements are even lower, such as at most 60% of the amounts indicated above for each additional element, and more preferably these optional elements are not added to the IF steel at all, meaning that these elements are only present as unavoidable impurity.

Yield strength Rp0,2 in transverse direction and tensile strength Rm in transverse direction preferably have a minimum and maximum value to be used commercially according to the norms.

The elongation A80 in transverse direction of at least 42% and the average plastic strain ratio r of at least 2.0 are among the most important factors to determine the ductility of the IF steel. The total elongation, in this case given as A80, provides a measure for the deformation that can be reached when the steel is elongated until fracture. A high elongation A80 thus is an indication for the deformability of the IF steel. The r-value is a measure of the resistance to thinning of steel to be used for deep drawing. The higher the r-value, the better the IF steel can be used for deep drawing. These parameters thus provide a measure to reach one or more of the objects of the invention. The steps to achieve these parameters are elucidated below.

Furthermore, the IF steel has a strain hardening exponent n90 in transverse direction of at least 0.22. The n-value is a measure to define the response of the IF steel to cold working. The higher the n-value, the more ductile the steel is. To assess the ductility of the steel, one should look at both the elongation A80, the r-value and the n90-value.

According to a preferred embodiment the steel has an elongation A80 in transverse direction of at least 44%, preferably of at least 46%, more preferably at least 48%, even more preferably at least 50%, most preferably at least 52%. The inventors have found that is possible to reach these high values for elongation A80 in combination with a high r-value and/or n-value.

It is also preferred when the steel has a strain hardening exponent n90 in transverse direction of at least 0.23, preferably of at least 0.24. Such high numbers for the n-value are very important to provide a highly ductile IF steel.

Furthermore, the steel preferably has an average plastic strain ratio r of at least 2.15, preferably of at least 2.20, more preferably of at least 2.25, even more preferably at least 2.30 or even 2.35, most preferably at least 2.4. Also, high numbers for the average r-value indicate that the ductility of the IF steel is improved.

Moreover, the steel has a plastic strain ratio in diagonal direction r45 of at least 1.8 or at least 1.9, preferably of at least 2.0, more preferably of at least 2.1, even more preferably at least 2.2, most preferably at least 2.3. By providing an IF steel having a r-value r45 in diagonal direction that is high, an additional measure for the ductility of the steel is provided. In practice, the r-values in all 3 directions have to be sufficiently high to provide an IF steel that is sufficiently ductile for deep drawing complex automotive parts.

According to the invention an ultra low carbon interstitial free steel strip, sheet or blank is provided having in weight% a composition of:
C: 0.0010 - 0.0022
Mn: 0.04 - 0.13
Si: 0.002 - 0.013
Al: 0.03-0.07
Ti: 0.05 - 0.09
Nb: max 0.002
V: max 0.004
P: 0.002 - 0.013
S: 0.003 - 0.013
N: 0.001 - 0.004
wherein Ti+Nb+V together max 0.10 and optionally:
Cr: max 0.04
Ni: max 0.04
B: max 0.0002
Ca: max 0.001
Cu: max 0.04
Mo: max 0.02
Sn : max 0.01.

This composition can be used to reach the highest ductility as required in the automotive industry.

As an indication of the ductility of the IF steel according to the invention it is preferred when the average plastic strain ratio r times the strain hardening exponent n90 in transverse direction is at least 0.44, preferably at least 0.48, more preferably at least 0.52, most preferably 0.56. This combination of average r-value and transverse n-value provides a good indication of the ductility of the IF steel, together with the elongation A80.

For another indication of the ductility of the IF steel according to the invention it is preferred when the plastic strain ratio in diagonal direction r45 times the strain hardening exponent n90 in transverse direction is at least 0.40, preferably at least 0.44, more preferably at least 0.48, most preferably at least 0.52. This combination of r-value in diagonal direction and n-value in transverse direction provides a different indication of the ductility of the IF steel, together with the elongation A80 value.

In a further indication of the ductility of the IF steel according to the invention the plastic strain ratio in transverse direction r90 times the strain hardening exponent in transverse direction n90 is at least 0.50, preferably at least 0.55, more preferably at least 0.58 or even at least 0.60, even more preferably at least 0.62, most preferably at least 0.64 or even 0.66. The combination of r-value and n-value both in transverse direction provides an indication of the ductility in transverse direction, which usually is higher than in diagonal direction.

A different indication of the ductility of the IF steel according to the invention is provided by the combination of plastic strain ratio in diagonal direction r45 and strain hardening exponent in diagonal direction n45, wherein the plastic strain ratio in diagonal direction r45 times the strain hardening exponent in diagonal direction n45 is at least 0.35, preferably at least 0.40, more preferably at least 0.45, even more preferably at least 0.48, most preferably at least 0.50. Since both the r-value and the n-value in diagonal direction are usually lower than in transverse direction and rolling direction, this combination provides a valuable measure for the ductility of the steel.

According to a special preferred embodiment of the IF steel according to the invention the yield strength Rp0,2 in transverse direction is between 110 and 155 MPa. A lower yield strength of the IF steel gives a better formability.

The IF steel according to the invention is coated with a zinc alloy coating. Such a coating is often needed in the automotive industry. These coatings are known to the person skilled in the art and are usually provided on the steel strip by hot dip coating.

The method steps that can be used to obtain the inventive IF steel will be elucidated below.

The inventors have found that the ductility of the IF steel according to the invention is highly influenced by the cold rolling reduction during the cold rolling of the steel. It has been found that a cold rolling reduction between 80% and 85% is needed to attain a high r-value.

Furthermore, the skin pass reduction of the IF steel strip as e.g. applied after hot dip galvanising also has a big effect on the strength and the ductility of the strip. The skin pass reduction should be limited to <1.0%, preferably between 0.4% and 0.7%.

Moreover, the inventors have found that the temperature of the steel strip in the last stand of the hot rolling finishing mill should preferably be between 900 and 950°C and the cooling rate in the run out table should preferably be around 60°C/s - 90°C/s, so preferably between 25°C/s and 150°C/s. The coiling temperature of the hot rolled strip is preferably around 700°C, so preferably between 600°C and 750°C. All these values are valid for the middle of the coil, the values at the head and tail end can be slightly different. These parameters are found to be especially advantageous for an IF steel containing an amount of titanium that is higher than 0.05 weight%.

Thus in a method to produce an interstitial free low carbon steel strip as elucidated above, molten steel with the composition as given is cast and after cutting into slabs hot rolled with a hot rolling finishing temperature between 900 and 950°C, preferably between 900°C and 940°C, more preferably between 900 and 930°C, cooled in the run out table with a cooling rate between 25°C/s and 150°C/s, preferably between 60°C/s and 90°C/s. The coiling temperature is between 600°C and 750°C, preferably between 675°C and 725°C. After cooling down and pickling the coils are cold rolled with a reduction of between 78% and 88%, preferably a reduction between 80% and 85%, and continuous annealed at a temperature of approximately 810°C (between 800°C and 820°C). After standard hot dip galvanising to provide a Gl coating the strips were skin passed with a reduction of between 0.4% and 0.7%, preferably approximately 0.6%. Further method steps are known to the person skilled in the art and are more or less standard.

The invention will be elucidated with reference to the following examples.

Table 1 shows the composition of 16 examples of coils as cast, hot rolled, cold rolled, hot dip galvanised, and skin passed. Table 1a provides the elements that are important or deliberately added, or present in higher amounts. Table 1b provides elements that are present in low amounts or as inevitable impurities. All elements in tables 1a and 1b are given in milli weight%. Alzo stands for acid soluble aluminium.

All examples are inventive examples, as follows from Table 2, in which the yield strength Rp0,2, the tensile strength Rm, the elongation A80, the plastic strain ratio r (the r-value) and the strain hardening exponent n (the n-value) are given in three directions: the longitudinal direction (in rolling direction of the coil), in diagonal direction (under 45 degrees with the rolling direction) and in transverse direction (under 90 degrees with the rolling direction).

At the end of Table 2 also the average r-value (r_AVG) is given, which is calculated as (r0+2*r45+r90)/4, wherein r0 is the plastic strain ratio in rolling or longitudinal direction, r45 is the plastic strain ratio in diagonal direction, and r90 is the plastic strain ratio in transverse direction.

**Table 1a**

| Ex | CAST ID | C | N | Mn | Si | Al | AlZo | Ti | Cu | Cr | Ni |
|---|---|---|---|---|---|---|---|---|---|---|---|
| 1 | M0737 | 1,3 | 2,7 | 107 | 4 | 56 | 54 | 67 | 13 | 21 | 18 |
| 2 | M1886 | 1,4 | 2,6 | 87 | 4 | 57 | 55 | 66 | 13 | 15 | 20 |
| 3 | M2790 | 1,9 | 2,3 | 66 | 3 | 52 | 50 | 64 | 13 | 14 | 21 |
| 4 | M8642 | 1,3 | 2,1 | 64 | 4 | 57 | 54 | 69 | 11 | 14 | 21 |
| 5 | N0499 | 1,4 | 2,9 | 95 | 5 | 56 | 54 | 68 | 16 | 31 | 24 |
| 6 | N6718 | 1,5 | 2,7 | 83 | 2 | 48 | 46 | 65 | 16 | 17 | 18 |
| 7 | N6719 | 1,3 | 2,5 | 121 | 3 | 58 | 54 | 68 | 17 | 21 | 18 |
| 8 | N6982 | 1,4 | 2,4 | 103 | 4 | 50 | 48 | 66 | 16 | 20 | 19 |
| 9 | N6987 | 1,4 | 2,0 | 98 | 3 | 52 | 50 | 67 | 17 | 22 | 21 |
| 10 | N6995 | 1,1 | 3,2 | 90 | 4 | 49 | 47 | 66 | 11 | 17 | 19 |
| 11 | N6997 | 1,1 | 3,4 | 102 | 3 | 52 | 50 | 66 | 13 | 17 | 18 |
| 12 | N8428 | 1,4 | 2,8 | 65 | 5 | 48 | 46 | 67 | 14 | 16 | 18 |
| 13 | N9832 | 1,0 | 3,0 | 64 | 4 | 42 | 41 | 59 | 17 | 22 | 21 |
| 14 | P1887 | 1,3 | 1,9 | 94 | 4 | 56 | 54 | 65 | 15 | 16 | 19 |
| 15 | P2198 | 1,3 | 2,9 | 95 | 4 | 57 | 55 | 70 | 18 | 22 | 26 |
| 16 | P2200 | 1,3 | 2,3 | 99 | 4 | 54 | 51 | 69 | 14 | 23 | 23 |

**Table 1b**

| Ex | CAST ID | P | S | Nb | B | V | Mo | Sn | Ca |
|---|---|---|---|---|---|---|---|---|---|
| 1 | M0737 | 5 | 6 | 0 | 0,1 | 2 | 3 | 3 | - |
| 2 | M1886 | 3 | 5 | 0 | 0,0 | 2 | 2 | 2 | - |
| 3 | M2790 | 4 | 8 | 0 | 0,0 | 2 | 3 | 3 | - |
| 4 | M8642 | 4 | 9 | 0 | 0,0 | 2 | 4 | 3 | - |
| 5 | N0499 | 6 | 6 | 0 | 0,1 | 2 | 5 | 2 | - |
| 6 | N6718 | 6 | 6 | 0 | 0,0 | 2 | 4 | 2 | 0 |
| 7 | N6719 | 7 | 6 | 0 | 0,0 | 2 | 2 | 2 | 0 |
| 8 | N6982 | 7 | 8 | 0 | 0,0 | 2 | 2 | 1 | 1 |
| 9 | N6987 | 6 | 4 | 0 | 0,1 | 2 | 3 | 2 | 0 |
| 10 | N6995 | 7 | 6 | 0 | 0,0 | 2 | 3 | 1 | 0 |
| 11 | N6997 | 6 | 6 | 0 | 0,0 | 2 | 3 | 2 | 0 |
| 12 | N8428 | 6 | 7 | 0 | 0,0 | 2 | 3 | 6 | 0 |
| 13 | N9832 | 7 | 6 | 0 | 0,0 | 2 | 4 | 2 | 0 |
| 14 | P1887 | 7 | 6 | 0 | 0,0 | 2 | 3 | 2 | 0 |
| 15 | P2198 | 6 | 6 | 0 | 0,0 | 2 | 7 | 2 | 0 |
| 16 | P2200 | 7 | 8 | 0 | 0,0 | 2 | 5 | 1 | 0 |

All coils of which the examples are shown in Table 1 and table 2 have been cast with the composition as given in Table 1 and have been hot rolled with a finishing temperature between 920°C and 930°C. The cooling rate at the run-out table was approximately 60°C/s, and the coiling temperature was approximately 710°C. All these values are valid for the middle of the coil, the values at the head and tail end can be slightly different.

After cooling down and pickling the coils were cold rolled with a reduction of 82% and continuous annealed at a temperature of approximately 810°C. After standard hot dip galvanising to provide a Gl coating the strips were skin passed with a reduction of 0.6%.

**Table 2**

| Ex | cast id | longitudinal | | | | | diagonal | | | | | transverse | | | | | |
|---|---|---|---|---|---|---|---|---|---|---|---|---|---|---|---|---|---|
| | | Rp | Rm | A80 | r- value | n- value | Rp | Rm | A80 | r- value | n- value | Rp | Rm | A80 | r- value | n- value | r_AVG |
| | | MPa | MPa | % | -- | -- | MPa | MPa | % | -- | -- | MPa | MPa | % | -- | -- | -- |
| 6 | N6718 | 141 | 290 | 48 | 2,20 | 0,24 | 146 | 296 | 48 | 1,95 | 0,23 | 144 | 288 | 44,5 | 2,75 | 0,23 | 2,21 |
| 10 | N6995 | 143 | 294 | 46,5 | 2,15 | 0,24 | 148 | 296 | 47,5 | 2,00 | 0,23 | 148 | 291 | 44 | 2,60 | 0,23 | 2,19 |
| 6 | N6718 | 146 | 296 | 45,5 | 2,25 | 0,23 | 150 | 298 | 45,5 | 2,00 | 0,22 | 149 | 295 | 47 | 2,50 | 0,23 | 2,19 |
| 6 | N6718 | 143 | 290 | 51 | 2,15 | 0,24 | 148 | 294 | 51,5 | 2,00 | 0,23 | 147 | 288 | 46,5 | 2,85 | 0,23 | 2,25 |
| 8 | N6982 | 139 | 292 | 47 | 2,15 | 0,24 | 145 | 296 | 44,5 | 2,10 | 0,23 | 142 | 290 | 47,5 | 2,95 | 0,23 | 2,33 |
| 9 | N6987 | 140 | 292 | 46 | 2,30 | 0,24 | 146 | 299 | 44,5 | 2,00 | 0,23 | 143 | 290 | 49 | 2,65 | 0,23 | 2,24 |
| 9 | N6987 | 141 | 294 | 46 | 2,30 | 0,24 | 145 | 299 | 44,5 | 2,15 | 0,23 | 144 | 292 | 47,5 | 2,75 | 0,23 | 2,34 |
| 8 | N6982 | 140 | 289 | 47 | 2,30 | 0,24 | 146 | 295 | 45,5 | 1,95 | 0,23 | 143 | 286 | 48,5 | 2,85 | 0,23 | 2,26 |
| 11 | N6997 | 149 | 288 | 47,5 | 2,20 | 0,23 | 155 | 295 | 45,5 | 1,85 | 0,22 | 152 | 285 | 46,5 | 2,80 | 0,23 | 2,18 |
| 11 | N6997 | 140 | 287 | 46 | 2,25 | 0,23 | 144 | 291 | 45,5 | 2,15 | 0,23 | 144 | 287 | 45,5 | 2,95 | 0,23 | 2,38 |
| 2 | M1886 | 127 | 288 | 48 | 2,20 | 0,24 | 132 | 292 | 46,5 | 2,20 | 0,23 | 130 | 287 | 47,5 | 2,90 | 0,24 | 2,38 |
| 2 | M1886 | 132 | 292 | 45 | 2,35 | 0,24 | 138 | 299 | 42 | 1,95 | 0,23 | 136 | 291 | 45,5 | 2,90 | 0,24 | 2,29 |
| 2 | M1886 | 125 | 288 | 46 | 2,20 | 0,24 | 130 | 292 | 45 | 2,05 | 0,23 | 129 | 287 | 46,5 | 2,80 | 0,24 | 2,28 |
| 4 | M8642 | 136 | 286 | 44 | 2,35 | 0,24 | 140 | 290 | 45,5 | 2,00 | 0,22 | 136 | 282 | 46 | 2,65 | 0,23 | 2,25 |
| 4 | M8642 | 135 | 282 | 49 | 2,30 | 0,23 | 137 | 286 | 50,5 | 2,10 | 0,22 | 135 | 280 | 54 | 2,70 | 0,23 | 2,30 |
| 4 | M8642 | 133 | 283 | 49 | 2,30 | 0,24 | 138 | 287 | 48,5 | 2,15 | 0,22 | 135 | 282 | 50,5 | 2,70 | 0,24 | 2,33 |
| 4 | M8642 | 136 | 288 | 41 | 2,15 | 0,24 | 142 | 294 | 41,5 | 1,85 | 0,23 | 139 | 287 | 48 | 2,70 | 0,23 | 2,14 |
| 1 | M0737 | 133 | 285 | 48,5 | 2,40 | 0,24 | 140 | 293 | 42,5 | 1,85 | 0,23 | 136 | 283 | 46,5 | 2,65 | 0,24 | 2,19 |
| 7 | N6719 | 144 | 292 | 48,5 | 2,25 | 0,24 | 150 | 294 | 46 | 2,20 | 0,22 | 149 | 290 | 46,5 | 3,00 | 0,23 | 2,41 |
| 12 | N8428 | 145 | 294 | 46 | 2,05 | 0,23 | 140 | 291 | 48 | 2,05 | 0,24 | 144 | 288 | 47,5 | 2,60 | 0,23 | 2,19 |
| 5 | N0499 | 138 | 289 | 49,5 | 2,30 | 0,23 | 143 | 294 | 50 | 2,20 | 0,22 | 141 | 289 | 48,5 | 3,05 | 0,23 | 2,44 |
| 15 | P2198 | 139 | 293 | 47,5 | 2,00 | 0,24 | 143 | 297 | 45,5 | 1,90 | 0,23 | 142 | 292 | 48,5 | 2,60 | 0,23 | 2,10 |
| 16 | P2200 | 145 | 289 | 47 | 2,15 | 0,24 | 151 | 292 | 48,5 | 2,10 | 0,23 | 149 | 288 | 50,5 | 2,80 | 0,23 | 2,29 |
| 16 | P2200 | 142 | 288 | 47 | 2,15 | 0,24 | 149 | 291 | 47 | 2,25 | 0,23 | 145 | 285 | 52 | 2,60 | 0,24 | 2,31 |
| 14 | P1887 | 145 | 293 | 49 | 2,00 | 0,24 | 150 | 296 | 50 | 1,95 | 0,23 | 148 | 290 | 49,5 | 2,60 | 0,23 | 2,13 |
| 14 | P1887 | 143 | 290 | 48 | 2,05 | 0,24 | 148 | 293 | 48,5 | 2,00 | 0,23 | 148 | 289 | 52 | 2,60 | 0,23 | 2,16 |
| 15 | P2198 | 145 | 291 | 49,5 | 2 | 0,24 | 149 | 295 | 48,5 | 1,95 | 0,23 | 148 | 289 | 49,5 | 2,6 | 0,23 | 2,13 |
| 15 | P2198 | 145 | 291 | 47 | 2,05 | 0,24 | 151 | 295 | 45 | 2,1 | 0,22 | 149 | 290 | 50,5 | 2,5 | 0,23 | 2,19 |
| 16 | P2200 | 141 | 286 | 50,5 | 2,05 | 0,24 | 147 | 289 | 48,5 | 1,95 | 0,23 | 144 | 286 | 48,5 | 2,75 | 0,23 | 2,18 |
| 14 | P1887 | 146 | 294 | 47 | 2 | 0,24 | 150 | 297 | 45 | 2 | 0,23 | 149 | 292 | 49 | 2,55 | 0,23 | 2,14 |
| 15 | P2198 | 145 | 289 | 47 | 2,1 | 0,24 | 151 | 291 | 48 | 2,15 | 0,23 | 151 | 288 | 51,5 | 2,8 | 0,23 | 2,30 |
| 13 | N9832 | 140 | 282 | 49,5 | 2,15 | 0,24 | 148 | 291 | 49,5 | 1,8 | 0,23 | 142 | 281 | 48,5 | 2,55 | 0,24 | 2,08 |

The relatively low Rp0,2 and the high levels of A80, r-value and n-value or combinations thereof can be attributed to a relatively high amount of Ti and Mn, in combination with a relatively low amount of C and Si. Of course, the process steps as indicated are preferred to reach such values.

The protection sought is not limited by the examples; in that respect, only the limitations of the claims count.

## Claims

1. Interstitial free low carbon steel strip, sheet or blank, **characterized in that** the steel has in weight% a composition of the following elements:
| | |
|---|---|
| C: | 0.0010 - 0.0022 |
| Mn: | 0.04-0.13 |
| Si: | 0.002 - 0.013 |
| Al: | 0.03-0.07 |
| Ti: | 0.05 - 0.09 |
| Nb: | max 0.002 |
| V: | max 0.004 |
| P: | 0.002 - 0.013 |
| S: | 0.003 - 0.013 |
| N: | 0.001 - 0.004 |
wherein Ti+Nb+V together max 0.10 and optionally:
| | |
|---|---|
| Cr: | max 0.04 |
| Ni: | max 0.04 |
| B: | max 0.0002 |
| Ca: | max 0.001 |
| Cu: | max 0.04 |
| Mo: | max 0.02 |
| Sn : | max 0.01 |
the remainder being Fe and unavoidable impurities,
the steel having a yield strength in transverse direction between 110 and 170 MPa, a tensile strength in transverse direction between 250 and 330 MPa, an elongation A80 in transverse direction of at least 42%, an average plastic strain ratio r of at least 2.00, and a strain hardening exponent n90 in transverse direction of at least 0.22; and a plastic strain ratio in diagonal direction r45 of at least 1.8, wherein the values of A80, r and n90 are the mean values of at least three measurements performed on at least three different strips of one cast, wherein the steel is coated with a zinc alloy coating

2. Interstitial free low carbon steel strip, sheet or blank according to claim 1, the steel having an elongation A80 in transverse direction of at least 44%, preferably of at least 46%, even more preferably at least 48%, even more preferably at least 50%, most preferably at least 52%.

3. Interstitial free low carbon steel strip, sheet or blank according to any one of the preceding claims, the steel having a strain hardening exponent n90 in transverse direction of at least 0.23, preferably of at least 0.24.

4. Interstitial free low carbon steel strip, sheet or blank according to any one of the preceding claims, the steel having an average plastic strain ratio r of at least 2.15, preferably of at least 2.20, more preferably of at least 2.25, even more preferably 2.30 or even 2.35, most preferably at least 2.40.

5. Interstitial free low carbon steel strip, sheet or blank according to any one of the preceding claims, the steel having a plastic strain ratio in diagonal direction r45 of at least 1.9, preferably of at least 2.0, more preferably of at least 2.1, even more preferably at least 2.2, most preferably at least 2.3.

6. Interstitial free low carbon steel strip, sheet or blank according to any one of the preceding claims, wherein the average plastic strain ratio r times the strain hardening exponent n90 in transverse direction is at least 0.44, preferably at least 0.48, even more preferably at least 0.52, most preferably at least 0.56.

7. Interstitial free low carbon steel strip, sheet or blank according to any one of the preceding claims, wherein the plastic strain ratio in diagonal direction r45 times the strain hardening exponent n90 in transverse direction is at least 0.40, preferably at least 0.44, more preferably at least 0.46, even more preferably at least 0.48, most preferably at least 0.52.

8. Interstitial free low carbon steel strip, sheet or blank according to any one of the preceding claims, wherein the plastic strain ratio in transverse direction r90 times the strain hardening exponent in transverse direction n90 is at least 0.50, preferably at least 0.55, more preferably at least 0.58 or even at least 0.60, even more preferably at least 0.62, most preferably at least 0.64 or even 0.66.

9. Interstitial free low carbon steel strip, sheet or blank according to any one of the preceding claims, wherein the plastic strain ratio in diagonal direction r45 times the strain hardening exponent in diagonal direction n45 is at least 0.35, preferably at least 0.40, more preferably at least 0.45, even more preferably at least 0.48, most preferably at least 0.50.

10. Interstitial free low carbon steel strip, sheet or blank according to any one of the preceding claims, wherein the yield strength Rp0,2 in transverse direction is between 110 and 155 MPa.

## Patentansprüche

1. Band, Blech oder Rohteil aus interstitialfreiem Stahl mit niedrigem Kohlenstoffgehalt, **dadurch gekennzeichnet, dass** der Stahl in Gewichtsprozent eine Zusammensetzung aus den folgenden Elementen aufweist:
C: 0,0010-0,0022
Mn: 0,04-0,13
Si: 0,002-0,013
Al: 0,03-0,07
Ti: 0,05-0,09
Nb: max. 0,002
V: max. 0,004
P: 0,002-0,013
S: 0,003-0,013
N: 0,001-0,004
wobei Ti+Nb+V zusammen max. 0,10
und optional:
Cr: max. 0,04
Ni: max. 0,04
B: max. 0,0002
Ca: max. 0,001
Cu: max. 0,04
Mo: max 0,02
Sn: max. 0,01,
wobei der Rest Fe und unvermeidbare Unreinheiten sind,
wobei der Stahl eine Streckgrenze in Querrichtung zwischen 110 und 170 MPa, eine Zugfestigkeit in Querrichtung zwischen 250 und 330 MPa, eine Dehnung A80 in Querrichtung von mindestens 42 %, ein durchschnittliches plastisches Dehnungsverhältnis r von mindestens 2,00 und einen Kaltverfestigungsexponenten n90 in Querrichtung von mindestens 0,22; und ein plastisches Dehnungsverhältnis in Diagonalrichtung r45 von mindestens 1,8 aufweist, wobei die Werte von A80, r und n90 die Mittelwerte von mindestens drei Messungen sind, die an mindestens drei verschiedenen Bändern eines Gusses durchgeführt wurden,
wobei der Stahl mit einer Zinklegierungsbeschichtung beschichtet ist.

2. Band, Blech oder Rohteil aus interstitialfreiem Stahl mit niedrigem Kohlenstoffgehalt nach Anspruch 1, wobei der Stahl eine Dehnung A80 in Querrichtung von mindestens 44 %, bevorzugt von mindestens 46 %, sogar noch bevorzugter mindestens 48 %, sogar noch bevorzugter mindestens 50 %, am meisten bevorzugt mindestens 52 % aufweist.

3. Band, Blech oder Rohteil aus interstitialfreiem Stahl mit niedrigem Kohlenstoffgehalt nach einem der vorhergehenden Ansprüche, wobei der Stahl einen Kaltverfestigungsexponenten n90 in Querrichtung von mindestens 0,23, bevorzugt von mindestens 0,24 aufweist.

4. Band, Blech oder Rohteil aus interstitialfreiem Stahl mit niedrigem Kohlenstoffgehalt nach einem der vorhergehenden Ansprüche, wobei der Stahl ein durchschnittliches plastisches Dehnungsverhältnis r von mindestens 2,15, bevorzugt von mindestens 2,20, noch bevorzugter von mindestens 2,25, sogar noch bevorzugter von 2,30 oder sogar 2,35, am meisten bevorzugt mindestens 2,40 aufweist.

5. Band, Blech oder Rohteil aus interstitialfreiem Stahl mit niedrigem Kohlenstoffgehalt nach einem der vorhergehenden Ansprüche, wobei der Stahl ein plastisches Dehnungsverhältnis in Diagonalrichtung r45 von mindestens 1,9, bevorzugt von mindestens 2,0, noch bevorzugter von mindestens 2,1, sogar noch bevorzugter mindestens 2,2, am meisten bevorzugt mindestens 2,3 aufweist.

6. Band, Blech oder Rohteil aus interstitialfreiem Stahl mit niedrigem Kohlenstoffgehalt nach einem der vorhergehenden Ansprüche, wobei das durchschnittliche plastische Dehnungsverhältnis r mal der Kaltverfestigungsexponent n90 in Querrichtung mindestens 0,44, bevorzugt mindestens 0,48, sogar noch bevorzugter mindestens 0,52, am meisten bevorzugt mindestens 0,56 beträgt.

7. Band, Blech oder Rohteil aus interstitialfreiem Stahl mit niedrigem Kohlenstoffgehalt nach einem der vorhergehenden Ansprüche, wobei das plastische Dehnungsverhältnis in Diagonalrichtung r45 mal der Kaltverfestigungsexponent n90 in Querrichtung mindestens 0,40, bevorzugt mindestens 0,44, noch bevorzugter mindestens 0,46, sogar noch bevorzugter mindestens 0,48, am meisten bevorzugt mindestens 0,52 beträgt.

8. Band, Blech oder Rohteil aus interstitialfreiem Stahl mit niedrigem Kohlenstoffgehalt nach einem der vorhergehenden Ansprüche, wobei das plastische Dehnungsverhältnis in Querrichtung r90 mal der Kaltverfestigungsexponent in Querrichtung n90 mindestens 0,50, bevorzugt mindestens 0,55, noch bevorzugter mindestens 0,58 oder sogar mindestens 0,60, sogar noch bevorzugter mindestens 0,62, am meisten bevorzugt mindestens 0,64 oder sogar 0,66 beträgt.

9. Band, Blech oder Rohteil aus interstitialfreiem Stahl mit niedrigem Kohlenstoffgehalt nach einem der vorhergehenden Ansprüche, wobei das plastische Dehnungsverhältnis in diagonaler Richtung r45 mal dem Kaltverfestigungsexponent in diagonaler Richtung n45 mindestens 0,35, bevorzugt mindestens 0,40, noch bevorzugter mindestens 0,45, sogar noch bevorzugter mindestens 0,48, am meisten bevorzugt mindestens 0,50 beträgt.

10. Band, Blech oder Rohteil aus interstitialfreiem Stahl mit niedrigem Kohlenstoffgehalt nach einem der vorhergehenden Ansprüche, wobei die Streckgrenze Rp0,2 in Querrichtung zwischen 110 und 155 MPa liegt.

## Revendications

1. Bande, tôle ou flan d'acier à faible teneur en carbone sans interstitiel, caractérisé s en ce que l'acier présente en % en poids une composition des éléments suivants :
C : 0,0010 à 0,0022
Mn : 0,04 à 0,13
Si : 0,002 à 0,013
Al : 0,03 à 0,07
Ti : 0,05 à 0,09
Nb : max 0,002
V : max 0,004
P : 0,002 à 0,013
S : 0,003 à 0,013
N : 0,001 à 0,004
dans lequel Ti+Nb+V ensemble max 0,10
et éventuellement :
Cr : max 0,04
Ni : max 0,04
B : max 0,0002
Ca : max 0,001
Cu : max 0,04
Mo : max 0,02
Sn : max 0,01
le reste étant le Fe et les impuretés inévitables,
l'acier comportant une limite d'élasticité en direction transversale comprise entre 110 et 170 MPa, une résistance à la traction en direction transversale comprise entre 250 et 330 MPa, un allongement A80 en direction transversale d'au moins 42%, un taux de déformation plastique moyen r d'au moins 2,00, et un exposant d'écrouissage n90 dans la direction transversale d'au moins 0,22 ; et un rapport de déformation plastique dans la direction diagonale r45 d'au moins 1,8, dans lequel les valeurs de A80, r et n90 sont les valeurs moyennes d'au moins trois mesures effectuées sur au moins trois bandes différentes d'une même coulée,
dans lequel l'acier est revêtu d'un revêtement en alliage de zinc.

2. Bande, tôle ou flan d'acier à faible teneur en carbone sans interstitiel selon la revendication 1, l'acier comportant un allongement A80 dans la direction transversale d'au moins 44 %, de préférence d'au moins 46 %, encore plus préférablement d'au moins 48 %, encore plus préférablement d'au moins 50 %, le plus préférablement d'au moins 52 %.

3. Bande, tôle ou flan d'acier à faible teneur en carbone sans interstitiel selon l'une quelconque des revendications précédentes, l'acier comportant un exposant d'écrouissage n90 dans la direction transversale d'au moins 0,23, de préférence d'au moins 0,24.

4. Bande, tôle ou flan d'acier à faible teneur en carbone sans interstitiel selon l'une quelconque des revendications précédentes, l'acier comportant un rapport de déformation plastique moyen r d'au moins 2,15, de préférence d'au moins 2,20, plus préférablement d'au moins 2,25, encore plus préférablement de 2,30 ou même 2,35, le plus préférablement d'au moins 2,40.

5. Bande, tôle ou flan d'acier à faible teneur en carbone sans interstitiel selon l'une quelconque des revendications précédentes, l'acier comportant un rapport de déformation plastique dans la direction diagonale r45 d'au moins 1,9, de préférence d'au moins 2,0, plus préférablement d'au moins 2,1, encore plus préférablement d'au moins 2,2, le plus préférablement d'au moins 2,3.

6. Bande, tôle ou flan d'acier à faible teneur en carbone sans interstitiel selon l'une quelconque des revendications précédentes, dans lesquels le rapport de déformation plastique moyen r multiplié par l'exposant d'écrouissage n90 dans la direction transversale est d'au moins 0,44, de préférence d'au moins 0,48, encore plus préférablement d'au moins 0,52, le plus préférablement d'au moins 0,56.

7. Bande, tôle ou flan d'acier à faible teneur en carbone sans interstitiel selon l'une quelconque des revendications précédentes, dans lesquels le rapport de déformation plastique dans la direction diagonale r45 multiplié par l'exposant d'écrouissage n90 dans la direction transversale est d'au moins 0,40, de préférence d'au moins 0,44, plus préférablement d'au moins 0,46, encore plus préférablement d'au moins 0,48, le plus préférablement d'au moins 0,52.

8. Bande, tôle ou flan d'acier à faible teneur en carbone sans interstitiel selon l'une quelconque des revendications précédentes, dans lesquels le rapport de déformation plastique dans la direction transversale r90 multiplié par l'exposant d'écrouissage dans la direction transversale n90 est d'au moins 0,50, de préférence d'au moins 0,55, plus préférablement d'au moins 0,58 ou même d'au moins 0,60, encore plus préférablement d'au moins 0,62, le plus préférablement d'au moins 0,64 ou même 0,66.

9. Bande, tôle ou flan d'acier à faible teneur en carbone sans interstitiel selon l'une quelconque des revendications précédentes, dans lesquels le rapport de déformation plastique dans la direction diagonale r45 multiplié par l'exposant d'écrouissage dans la direction diagonale n45 est d'au moins 0,35, de préférence d'au moins 0,40, plus préférablement d'au moins 0,45, encore plus préférablement d'au moins 0,48, le plus préférablement d'au moins 0,50.

10. Bande, tôle ou flan d'acier à faible teneur en carbone sans interstitiel selon l'une quelconque des revendications précédentes, dans lesquels la limite d'élasticité Rp0,2 dans la direction transversale est comprise entre 110 et 155 MPa.
